Europäisches Patentamt

European Patent Office

Office européen des brevets

(19)

(11) **EP 0 948 150 A2**

(12) **EUROPEAN PATENT APPLICATION**

(43) Date of publication:
06.10.1999 Bulletin 1999/40

(51) Int. Cl.⁶: **H04B 10/08**

(21) Application number: **99105085.7**

(22) Date of filing: **24.03.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **30.03.1998 JP 9989998**

(71) Applicant: **NEC CORPORATION
Tokyo (JP)**

(72) Inventor: **Fujita, Masayuki
Minato-ku, Tokyo (JP)**

(74) Representative:
**VOSSIUS & PARTNER
Siebertstrasse 4
81675 München (DE)**

(54) **Light monitoring apparatus with simple structure**

(57) A light monitoring apparatus includes a first light wave guide section (21A, 32), a second light wave guide section (22A, 33), a light reflecting section (25) and a light receiving element (27). The first light wave guide section has a first end portion, and the second light wave guide section has a second end portion which is evanescent-coupled to the first end portion of the first light wave guide section. The light reflecting section is provided to transmit a part of a light signal transmitted through each of the first and second light wave guide sections and to reflect the other part of the light signal. The light receiving element receives the part of the light signal transmitted through the light reflecting section to produce a level indication signal indicative of a signal level of the part of the light signal transmitted through the light reflecting section.

## Fig. 2

## Description

The present invention relates to an light monitoring apparatus used in an optical communication and an optical information process and, more particularly to an light monitoring apparatus for monitoring a level of a light transmitted through an optical fiber.

A communication system using an optical fiber and an optical information processor using an optical fiber are noted since they can transmit a large capacity of data at a high quality. However, when the optical fiber is used for a data transmission path, there is a problem of an attenuation of a signal light, especially in a long distance optical fiber system. For this reason, an optical repeater is conventionally used to amplify a light signal if the optical fiber is arranged for the long distance transmission.

As the optical repeater, there is known an optical fiber amplifier for directly amplifying a light signal by use of a rare-earth element doped optical fiber as an amplifying device. In such an optical repeater, the transmission quality of the light signal is kept constant by amplifying a level of the transmitted light signal to a predetermined value. For this purpose, a light monitoring apparatus has been conventionally used.

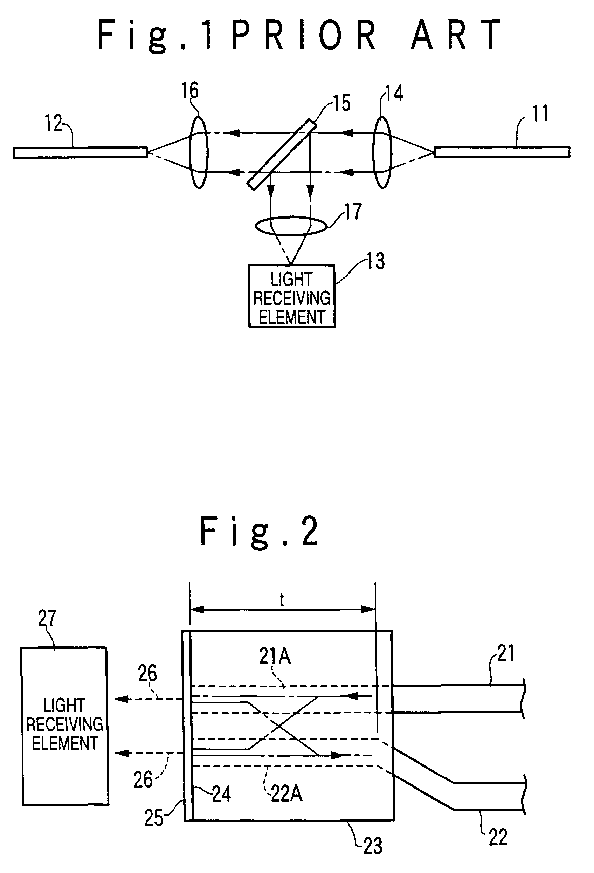

Fig. 1 shows a structure example of the conventional light monitoring apparatus. In the light monitoring apparatus, a light signal outputted from a first optical fiber 11 is inputted to a second optical fiber 12. On the other hand, a part of the light signal is inputted to a light receiving element 13 by an optical system mounted on the way of light transmission path such that a signal level of the light signal is monitored.

For this purpose, an optical system for carrying out the above-mentioned operation is composed of a first optical fiber 11, a second optical fiber 12, a light receiving element 13, a first lens 14, a half mirror 15, a second lens 16 and a third lens 17, and carries out the above-mentioned operation. The first lens 14 converts the light emitted by the first optical fiber 11 into collimated light beams. The half mirror 15 receives this collimated light beams. The second lens 16 couples the light bemas transmitted through the half mirror 15 to the second optical fiber 12. The third lens 17 converges the collimated light beams reflected by the half mirror 15 onto the light receiving element 13.

In such a conventional light monitoring apparatus, a part of the light signal emitted from the first optical fiber 11 is reflected by the half mirror 15 and then arrives at the light receiving element 13 through the third lens 17. As a result, the signal level of the light signal part after the amplification or before the amplification is detected by the light receiving element 13. Thus, if the light signal outputted from the first optical fiber 11 is the signal after the amplification, the signal level of the light signal can be adjusted by feeding back to an optical fiber amplifier (not shown). As a result, the signal level of the light signal can be set to a predetermined value.

On the other hand, if the light signal outputted from the first optical fiber 11 is the signal before the amplification, the signal level of the signal light can be set to a desired value by adjusting an amplification factor of the optical fiber amplifier on the basis of the signal level detected by the light receiving element 13.

Although the light signal is branched by use of the half mirror 15 in the light monitoring apparatus shown in Fig. 1, the input light signal may be branched by use of a beam splitter. In Japanese Laid Open Patent Application (JP-A-Heisei 3-12610), a light signal is branched into two directions by use of such a beam splitter and the one branched light signal is supplied to the light receiving element so that the signal level can be monitored. Also, in a technique disclosed in Japanese Laid Open Patent Application (JP-A-Heisei 6-331940), a light signal is branched into two directions by use of the half mirror. One of the branched light signals is supplied to the light receiving element similarly to the case in Fig. 1. However, a filter plate is rotatably disposed in front of the light receiving element. This is intended to compensate for the polarization dependence of the reflection light after the branching operation by rotatably disposing on a light path the filter plate which serves as an absorbent filter having anisotropy.

In the above-mentioned conventional light monitoring apparatuses, the light signal is branched into the two directions and one of the branched light signals is supplied to the light receiving element such that it is monitored, as mentioned above. For this reason, there are required not only the optical element such as the half mirror but also the plurality of lenses. Also, there is required an optical filter. Thus, there is a problem in that the number of optical elements becomes more, which further leads to a problem that the light monitoring apparatus itself becomes expensive. Also, the optical element such as the half mirror and the beam splitter branches the light signal into a direction orthogonal to a traveling direction of the light. Therefore, this brings about a problem that a volume occupied by the light monitoring apparatus becomes large.

In addition to the above conventional examples, a light monitoring apparatus is described in JP-A-54-89756.

In this reference, a light signal emitted from a light transmission path is supplied to a light detector via an optical medium such as a prism, a converging type light transmission path and a convex lens. The light signal is reflected at a surface of the light detector. Then, the reflected light signal is entered into another light transmission path via the optical medium. A light component absorbed by the light detector at the reflection is detected to monitor the light transmission path.

It is therefore an object of the present invention to provide a light monitoring apparatus in which the number of optical elements can be reduced and a level of a light signal can be monitored.

In order to achieve an aspect of the present invention, a light monitoring apparatus includes a first light wave guide section, a second light wave guide section, a light reflecting section and a light receiving element. The first light wave guide section has a first end portion, and the second light wave guide section has a second end portion which is evanescent-coupled to the first end portion of the first light wave guide section. The light reflecting section is provided to transmit a part of a light signal transmitted through each of the first and second light wave guide sections and to reflect the other part of the light signal. The light receiving element receives the part of the light signal transmitted through the light reflecting section to produce a level indication signal indicative of a signal level of the part of the light signal transmitted through the light reflecting section.

The lengths of the first and second end portions are predetermined, and the first and second end portions are substantially equal to 1/2 of a full coupling length of evanescent wave.

The first and second light wave guide sections includes first and second optical fibers, respectively, and the first and second optical fibers are inter-twisted in the first and second end portions. When each of the first and second optical fibers includes a core portion and a clad portion to surround the core portion, the first and second end portions are embedded in a section which is formed of a material having a same refractive index as that of the clad portion.

The first and second light wave guide sections are separated from each other by a first distance in the first and second end portions such that a light signal transmitted through the first light wave guide section is moved into the second light wave guide section. In this case, the first and second light wave guide sections are separated from each other by a second distance larger than the first distance in portions other than the first and second end portions such that a light signal transmitted through the first light wave guide section is not moved into the second light wave guide section.

The first and second light wave guide sections are formed in a quartz substrate. The light monitoring apparatus may further includes first and second optical fibers which are coupled to the first and second light wave guide sections, respectively.

The light reflecting section is fit to surfaces of the first and second end portions of the first and second light guide sections. In this case, the light reflecting section is formed of one of a dielectric material and a metal material. Also, the light reflecting section is a multi-layer film. Also, a ratio of the reflected light signal and the transmitted light signal in the light reflecting section is changeable based on a wave length of the light signal. Further, the light reflecting section transmits a portion of the light signal having a predetermined wave length and reflects the other portion of the light signal having a wave length other than the predetermined wave length. In addition, the light reflecting section is detachable.

Fig. 1 is a block diagram illustrating an example of the structure of a conventional light monitoring apparatus;

Fig. 2 is a plan view showing a principal structure of a light monitoring apparatus according to a first embodiment of the present invention;

Fig. 3 is a plan view showing a modification of a light monitoring apparatus according to the first embodiment of the present invention;

Fig. 4 is a perspective view showing the structure of the light monitoring apparatus according to a second embodiment of the present invention; and

Fig. 5 is a plan view showing the structure of the light monitoring apparatus according to the second embodiment of the present invention.

The light monitoring apparatus of the present invention will be described below in detail with reference to the attached drawings.

Fig. 2 shows a structure of a light monitoring apparatus according to the first embodiment of the present invention. The light monitoring apparatus is composed of a first optical fiber 21, a second optical fiber 22, a covering section 23, a light reflecting film 25 and a light receiving element 27.

The first optical fiber 21 transmits a light signal from a right side to a left side direction on Fig. 2. The second optical fiber 22 has a left end portion 22A adjacent to a left end portion 21A of the first optical fiber 21. The left end portions 21A and 22A of the first and second optical fibers 21 and 22 have a predetermined length t. Each of the first and second optical fibers 21 and 22 is a single mode optical fiber and has a structure with a core portion and a clad portion.

Moreover, these first and second optical fibers 21 and 22 are covered with a covering section 23 in the left end portions 21A and 22A. The covering section 23 is formed of the same material as the clad portions of the first and second optical fibers 21 and 22. That is, the left end portions 21A and 22A of the optical fibers 21 and 22 are embedded in the covering section 23 along the portion of the predetermined length t. An end surface 24 on a left side of the covering section 23 in Fig. 2 coincides with the left end portions of the first and second optical fibers 21 and 22.

The light reflecting film 25 is formed on the end surface 24 to transmit a part of an incident light signal and reflecting the remainder thereof. The light receiving element 27 is disposed on a left side of the light reflecting film 25 to receive the light signals 26 transmitted through the light reflecting film 25. A photo diode is used for the light receiving element 27 in this embodiment.

In the light monitoring apparatus having the above-mentioned structure in this embodiment, the lengths t of and an interval between the first and second optical fibers 21 and 22 in the covering sect ion 23 are set to values at which the evanescent wave coupling phenomenon of the light signals occurs. In the first embodiment, the first and second optical fibers 21 and 22 are inter-twisted with each other along a length of approximately 2 cm as the length t. The twisted portion of the length t is heated, so that the clad portions of the optical fibers 21 and 22 are fused to form the covering section 23 as a unit.

That is, it is illustrated in Fig. 2 for the purpose of easy explanation that the covering section 23 is formed of the same material as the clad portions to cover around the first and second optical fibers 21 and 22. However, it could be understood that there is a common clad portion between the core portions of the two optical fibers 21 and 22. In the evanescent coupling, the light signal transmitted through one wave guide is moved to the other wave guide as the result of interaction between the two wave guides when the light signals are transmitted by a certain distance.

As shown by using arrows in Fig. 2, the light transmitted in the direction from the first optical fiber 21 to the light reflecting film 25 is moved to the second optical fiber 22 by the evanescent coupling. If the interaction distance in which the optical fibers 21 and 22 interact with each other is set to be longer than a full coupling length L of the evanescent wave as a length in which the light signal is completely moved to the optical fiber 22, the light signal is moved from the core portion of the first optical fiber 21 to the core portion of the second optical fiber 22. Then, the light signal is moved from the core port ion of the second optical fiber 22 to the core portion of the first optical fiber 21 again. As a result, if the portion of the length t in which the first and second optical fibers 21 and 22 are adjacent to each other is an infinitely long interaction distance, the light signal originally transmitted through the first optical fiber 21 repeats the movement between the first optical fiber 21 and the second optical fiber 22.

In addition, the full coupling length L is a value determined based on a wave length of the light signal transmitted through the first and second optical fibers 21 and 22 and a clad portion distance between the fibers 21 and 22. The relation between the full coupling length L and the length t (coupling length) is represented by the following equation (1):

$$t = L/2 \qquad (1)$$

where a wave length usually used for the light signal may be ranged from 1.2 to 1.6 $\mu$m in many cases.

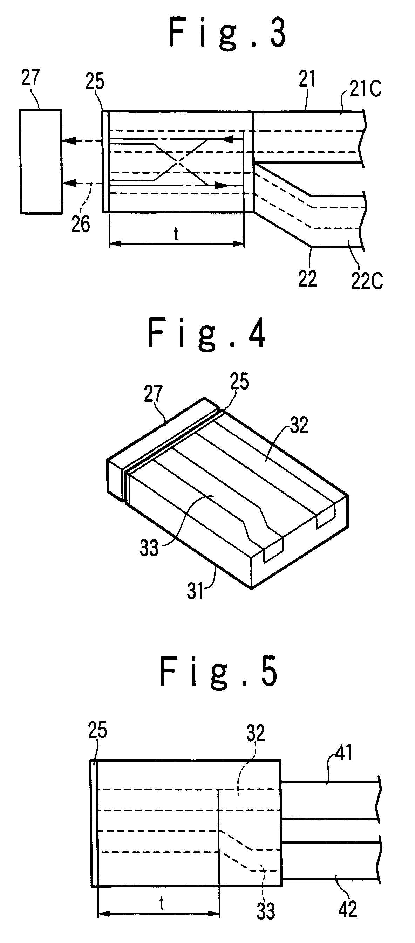

Fig. 3 shows a modification of the structure of the light monitoring apparatus when the clad portions of the first and second optical fibers 21 and 22 are heated and fused to be adhered to each other. A clad portion 21C of the first optical fiber 21 and a clad portion 22C of the second optical fiber 22 are fused to be adhered to each other along at least the length t in the left end portions of the optical fibers.

Referring to Fig. 2 again, the description will be continued. In the light monitoring apparatus of the first embodiment, the light reflecting film 25 is formed on the left end surfaces of the first and second optical fibers 21 and 22. The light reflecting film 25 in the first embodiment is formed as a dielectric multi-layer film. The light reflecting film 25 is formed by evaporating $TiO_2$ or $SiO_2$ on the end surface of the covering section 23 in a form of a multi-layer. Therefore, a part of the light signal emitted from the left end portion of the first optical fiber 21 in Fig. 2 is transmitted through the light reflecting film 25 and supplied to the light receiving element 27 as the transmission light 26. Also, a part of the light signal is moved from the first optical fiber 21 to the second optical fiber 22 through the covering section 23 and emitted from the left end surface of the optical fiber 22. The part of the light signal is transmitted through the light reflecting film 25 and supplied to the light receiving element 27 as the transmission light 26. At this time, the level of the light signal parts transmitted through the light reflecting film 25 is monitored by the light receiving element 27.

Of course, the remaining part of the light signal reflected by the light reflecting film 25 is transmitted on the first optical fiber 21 to the right direction in Fig. 2 and then moved to the second optical fiber 21. Also, the remaining part of the light signal fully moved to the second optical fiber 22 is reflected by the light reflecting film 25 and then transmitted to the right direction in Fig. 2.

Fig. 4 shows a main portion of the light monitoring apparatus according to the second embodiment of the present invention. In the second embodiment, the same reference numerals are given to the elements identical to those in Fig. 2. Thus, these explanations are properly omitted. This light monitoring apparatus in the second embodiment is composed of a quartz substrate 31. First and second wave guides 32 and 33 are formed in parallel to and adjacently to each other, in the quartz substrate 31. The light reflecting film 25 is formed on a left end portion of the quartz substrate 31. The light receiving element 27 is disposed opposite to the light reflecting film 25. The light receiving element 27 may be provided to have a small distance from the light reflecting film 25. Optical fibers are connected to the other end portion of the quartz substrate 31 to input and output a light signal. An interval between the first and second wave guides 32 and 33 is several micro-meters and very narrow. Therefore, a portion of the second wave guide 33 on the optical fiber is curved in a direction apart from the first wave guide 32 to make this connection of the optical fibers to the substrate 31 easy

Fig. 5 shows the situation that the optical fibers are connected to the quartz substrate 31 of the light monitoring apparatus in the second embodiment. An end surface of a first optical fiber 41 is connected to an end surface of the first wave guide 32, and an end surface of a second optical fiber 42 is connected to an end surface of the second wave guide 33. A length t (coupling length) in a straight portion of the second wave guide 33 is set to a length satisfying the above equation (1) in relation to the full coupling length L.

In this light monitoring apparatus in the second embodiment, the first and second wave guides 32 and 33 are formed in the quartz substrate 31 and the light reflecting film 25 is formed on the end surface of the quartz substrate 31. Thus, the main portion of the light monitoring apparatus can be easily formed only by connecting the two optical fibers to the first and second wave guides 32 and 33, respectively. In addition, this light monitoring apparatus does not require the operations explained in the first embodiment in which the two optical fibers are inter-twisted with each other and then heated and fused. Thus, the length t (coupling length) can be exactly set, which can improve the yield to thereby provide the light monitoring apparatus with a low cost and a high accuracy.

In the above-mentioned embodiments, the light reflecting film 25 is formed by evaporating the thin film made of $TiO_2$, $SiO_2$ on the end surface of the covering section 23 in the form of the multi-layer. However, a film structure made of dielectric material other than the above-mentioned materials or metal such as gold may be used if the film structure can reflect and transmit the light at a predetermined ratio. Of course, a flat plate structure having a certain thickness may be used instead of the film structure. Also, the light reflecting film may be detachable. Moreover, it is described in the embodiment that the light reflecting film 25 reflects the light emitted from the optical fiber at the constant ratio. However, the reflection factor or the transmission factor may be changed on the basis of the wave length of the incident light signal.

The light reflecting film 25 or the reflection plate may have the transmission performance only for a particular wave length of an incident light signal and have the wave length dependency that substantially 100 % of the incident light signal is reflected in wave lengths other than the particular wave length. Then, it is possible to use such a light reflecting film 25 or a reflection plate such that a noise component other than the light signal can be removed. Thus, the removal of the noise component from the input light signal to the light receiving element 27 becomes perfect or substantially perfect, which can sufficiently improve the accuracy as the monitoring apparatus of the light receiving element 27.

Moreover, in the first embodiment, the two optical fibers are inter-twisted with each other and then heated and fused to be adhered to each other. However, after two optical fibers are inter-twisted with each other and then heated and fused, this fused portion may be spread or elongated to form the above-mentioned coupling portion of the length t by use of a manufacturing method similar to that of an optical fiber fusion adhering type WDM coupler. In this case, this coupling portion is cut off, and then the cut surface is polished, and further the length t is adjusted. After that, the processes of forming the light reflecting film are carried out.

As mentioned above, according to the light monitoring apparatus of the invention, the first and second light wave guides are positioned in parallel to each other with an interval by a predetermined length so as to achieve the evanescent coupling. Further, the light is inputted to the light receiving element through the light reflecting means disposed at the end portions of these first and second light wave guides. Thus, the number of optical elements can be reduced to thereby miniaturize the light monitoring apparatus. Moreover, the wave length of the light signal to be monitored can be changed, and the ratio of the light signal to be monitored can be adjusted, in accordance with the reflection performance of the light reflecting means. Therefore, the flexible structure of the light monitoring apparatus can be attained.

Also, the end portions in the first and second optical fibers are covered with the material having the same refractive index as the clad portions of these optical fibers by a predetermined length from the end portions without any gap. Thus, the positional relation between the end port ions is stable. Moreover, since the evanescent coupling is directly performed between the optical fibers, the light monitoring apparatus can be further miniaturized.

Moreover, the first and second light wave guides are formed in the substrate in parallel to each other with a relatively narrow interval by a predetermined length to realize the evanescent coupling. At the end portions of these first and second light wave guides, the light reflecting film is positioned. End portions of the first and second optical fibers are connected to the end portions of the first and second light wave guides. Thus, it is easy to realize the evanescent coupling. Therefore, it is possible to improve the yield of the light monitoring apparatus to thereby achieve the decrease in cost.

**Claims**

1.   A light monitoring apparatus comprising:

a first light wave guide section (21A, 32) having a first end portion;
a second light wave guide section (22A, 33) having a second end portion which is evanescent-coupled to said first end portion of said first light wave guide section;
a light reflecting section (25) provided to transmit a part of a light signal transmitted through each of said first and second light wave guide sections and to reflect the other part of said light signal; and
a light receiving element (27) for receiving the part of the light signal transmitted through said light reflecting section to produce a level indication signal indicative of a signal level of the part of the light signal transmitted through said light reflecting section.

2.   A light monitoring apparatus according to claim 1, wherein lengths of said first and second end portions are predetermined.

3. A light monitoring apparatus according to claim 2, wherein said first and second end portions are substantially equal to 1/2 of a full coupling length of evanescent wave.

4. A light monitoring apparatus according to any one of claims 1 to 3, wherein said first and second light wave guide sections includes first and second optical fibers, respectively, and

said first and second optical fibers are intertwisted in the first and second end portions.

5. A light monitoring apparatus according to claim 4, wherein each of said first and second optical fibers includes a core portion and a clad portion to surround the core portion, and wherein said first and second end portions are embedded in a section which is formed of a material having a same refractive index as that of the clad portion.

6. A light monitoring apparatus according to any one of claims 1 to 5, wherein said first and second light wave guide sections are separated from each other by a first distance in said first and second end portions such that a light signal transmitted through said first light wave guide section is moved into said second light wave guide section.

7. A light monitoring apparatus according to claim 6, wherein said first and second light wave guide sections are separated from each other by a second distance larger than the first distance in portions other than said first and second end portions such that a light signal transmitted through said first light wave guide section is not moved into said second light wave guide section.

8. A light monitoring apparatus according to any one of claims 1 to 7, wherein said first and second light wave guide sections are formed in a quartz substrate.

9. A light monitoring apparatus according to claim 8, further comprising first and second optical fibers which are coupled to said first and second light wave guide sections, respectively.

10. A light monitoring apparatus according to any one of claims 1 to 9, wherein said light reflecting section is fit to surfaces of said first and second end portions of said first and second light guide sections.

11. A light monitoring apparatus according to claim 10, wherein said light reflecting section is formed of one of a dielectric material and a metal material.

12. A light monitoring apparatus according to claims 10 or 11, wherein said light reflecting section is a multi-layer film.

13. An apparatus according to claims 10, 11 or 12, wherein a ratio of the reflected light signal and the transmitted light signal in said light reflecting section is changeable based on a wave length of said light signal.

14. An apparatus according to claims 10, 11, 12 or 13, wherein said light reflecting section transmits a portion of the light signal having a predetermined wave length and reflects the other portion of the light signal having a wave length other than the predetermined wave length.

15. An apparatus according to any one of claims 10 to 14, wherein said light reflecting section is detachable.

# Fig.1 PRIOR ART

# Fig.2

# Fig.3

# Fig.4

# Fig.5